# EUROPEAN PATENT APPLICATION

(11) **EP 2 662 751 A1**
(43) Date of publication of application: **13.11.2013**
(21) Application number: 11865082.9
(22) Date of filing: 21.11.2011
(51) Int. Cl.: G06F 3/01, G06F 3/033

(54) **METHOD AND DEVICE FOR AN ELECTRONIC TERMINAL TO REALIZE DESKTOP SWITCHING, AND ELECTRONIC TERMINAL**

(30) Priority: 22.07.2011 CN 201110207374
(71) Applicant: ZTE Corporation, Shenzhen, Guangdong 518057 (CN)
(72) Inventor: LIAO, Hailiang, Shenzhen Guangdong 518057 (CN); ZHANG, Zhiping, Shenzhen Guangdong 518057 (CN); CHEN, Qiuyi, Shenzhen Guangdong 518057 (CN)
(74) Representative: Harrison Goddard Foote LLP
(86) International application number: PCT/CN2011/082564
(87) International publication number: WO 2012/151930

(57) **Abstract**

The present application discloses a method and device for an electronic terminal to realize desktop switching, and the electronic terminal thereof to avoid monotonous desktop switching through screen sliding and to enrich the functions of the electronic terminal. The method includes that: a current motion state of an electronic terminal is acquired by way of an acceleration sensor arranged in the electronic terminal; a primary desktop switching mode corresponding to the current motion state is determined according to a stored corresponding relation between a motion state and a desktop switching mode; and desktop switching is performed according to the primary desktop switching mode.

## Description

### TECHNICAL FIELD

The present disclosure relates to the technical field of mobile terminal User interface (UI), and in particular to a desktop switching method, device, and electronic terminal.

### BACKGROUND

With the rapid development of mobile phones and consumer electronics, the functions of mobile phone desktops become increasingly powerful, a multi-screen system is adopted by desktop systems of more and more mobile phones of, for example an android system or an iphone. A mobile phone with the multi-screen system may accommodate more icons on desktops which is convenient in use.

However, an increase in the number of these icons makes it more difficult to switch between the numerous desktops quickly to open an icon of an application. Presently, for desktop switching of the mobile phone with the multi-screen system, switching through paddling is generally adopted, that is to say, switching between desktops is done by sliding a screen in a certain direction. For example, the screen is slid to the left to switch to the last desktop, and to the right to switch to the next desktop.

It may be seen that although such a way of screen sliding may switch between desktops quickly, but it is too monotonous to meet the diversified and personalized need of the market.

### SUMMARY

An embodiment of the present disclosure provides a method and device for an electronic terminal to realize desktop switching, and an electronic terminal to avoid monotonous desktop switching through screen sliding and to enrich the functions of the electronic terminal.

The embodiment of the present disclosure provides a desktop switching method, including:
acquiring a current motion state of the electronic terminal by way of an acceleration sensor arranged in the electronic terminal;
determining a primary desktop switching mode corresponding to the current motion state according to a stored corresponding relation between a motion state and a desktop switching mode; and
performing desktop switching according to the primary desktop switching mode.

The embodiment of the present disclosure provides a desktop switching device, including an acquiring unit, a determining unit, and a switching unit, wherein
the acquiring unit is configured to acquire a current motion state of the electronic terminal by way of an acceleration sensor arranged in the electronic terminal;
the determining unit is configured to determine a primary desktop switching mode corresponding to the current motion state according to a stored corresponding relation between a motion state and a desktop switching mode; and
the switching unit is configured to perform desktop switching according to the primary desktop switching mode.

The embodiment of the present disclosure provides an electronic terminal including the desktop switching device described above.

In the embodiment of the present disclosure, the current motion state of the electronic terminal is acquired by way of the acceleration sensor arranged in the electronic terminal, the primary desktop switching mode corresponding to the current motion state is determined according to the stored corresponding relation between a motion state and a desktop switching mode, and desktop switching is performed according to the primary desktop switching mode. Thus, screen switching may be realized rapidly in the electronic terminal with the multi-screen system by swinging the electronic terminal. Thus, there is no need to switch between desktops through screen sliding, avoiding a monotonous way of screen switching and meeting the diversified and personalized need of the market, which may increase the market share of the electronic terminal with the multi-screen system.

### BRIEF DESCRIPTION OF THE DRAWINGS

Fig. 1 is a flowchart of desktop switching in an embodiment of the present disclosure;
Fig. 2 is a schematic view of acceleration composition in an embodiment of the present disclosure; and
Fig. 3 is the diagram of the structure of a desktop switching device in an embodiment of the present disclosure.

### DETAILED DESCRIPTION

In an embodiment of the present disclosure, an electronic terminal is a mobile terminal in which a corresponding relation between a motion state of the mobile terminal and a desktop switching mode is stored and an acceleration sensor is configured, such that a current motion state may be acquired via the acceleration sensor when the mobile terminal is swung; then a primary desktop switching mode corresponding to the current motion state is determined according to the stored corresponding relation between a motion state and a desktop switching mode; and finally, desktop switching is performed according to the primary desktop switching mode.

Wherein, the acceleration sensor is also known as a gravity sensor, which is a sensor that converts a gravity or acceleration motion into a corresponding electrical signal. The mobile terminal configured with the acceleration sensor may acquire the current motion state of the mobile terminal itself such as flipping, rotating, swinging etc. Moreover, the swinging includes swinging to the left, swinging to the right, swinging downward, or swinging upward. That is to say, the current motion state includes flipping, rotating, swinging to the left, swinging to the right, swinging downward, or swinging upward.

The corresponding relation between a motion state and a desktop switching mode stored in the mobile terminal is configurable, namely may be configured according to an actual application. For example, refer to Table 1 for the corresponding relation between a motion state and a desktop switching mode stored in the mobile terminal.

**Table 1**

| Motion State | Desktop Switching Mode |
|---|---|
| swinging to the left | switching to the last desktop |
| swinging to the right | switching to the next desktop |
| swinging downward | switching to a starting desktop |
| swinging upward | switching to an ending desktop |
| □□ | □□ |

Of course, Table1 is only one form of the corresponding relation between a motion state and a desktop switching mode. Other forms of the corresponding relation between a motion state and a desktop switching mode may also be configured by an embodiment of the present disclosure. For example, each desktop has a number and thus, swinging to the left corresponds to switching to the 2nd desktop, flipping corresponds to switching to the 5th desktop, rotating corresponds to switching to the 10th desktop, etc.

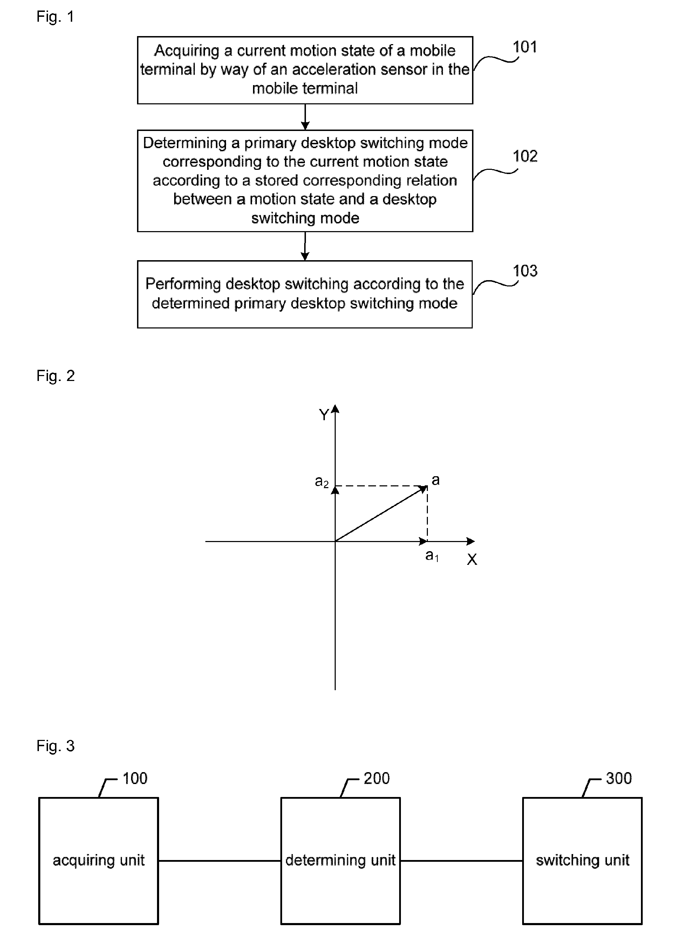

After the corresponding relation between a motion state and a desktop switching mode, namely the corresponding relation between a motion state and a desktop switching mode stored in the mobile terminal, is configured, a desktop switching process (see Figure 1) includes the following steps:
Step 101: acquiring a current motion state of a mobile terminal by way of an acceleration sensor in the mobile terminal.

During the movement of the mobile terminal, the acceleration sensor will output a first acceleration in a horizontal direction and a second acceleration in a vertical direction. With different ranges and speeds of the movement of the mobile terminal, the first acceleration and the second acceleration output by the acceleration sensor will also be different.

Thus, after the first acceleration in the horizontal direction and the second acceleration in the vertical direction output by the acceleration sensor are acquired, the current motion state may be determined according to a composite acceleration generated by the first acceleration and the second acceleration.

As shown in Fig. 2, an X-direction is the horizontal direction, and a Y-direction is the vertical direction. **a₁** is the first acceleration, **a₂** is the second acceleration, and **a** is the composite acceleration. Thus, the composite acceleration **a** involves both a magnitude and a direction. and it may thereby be determined that the current motion state is swinging to the right according to the composite acceleration **a**.

Of course, in an embodiment of the present disclosure, the current motion state may be further subdivided into, for example, swinging to the left for more than 45°, or swinging to the right for less than 45 °.

Step 102: determining a primary desktop switching mode corresponding to the current motion state according to a stored corresponding relation between a motion state and a desktop switching mode.

Since the corresponding relation between a motion state and a desktop switching mode is already stored in the mobile terminal, and the current motion state has been acquired in step 101, the primary desktop switching mode corresponding to the current motion state may be determined according to the corresponding relation.

For example, it has been acquired in step 101 that the current motion state is swinging to the right, while the corresponding relation between a motion state and a desktop switching mode stored on the mobile terminal is as shown in Table 1; therefore the determined primary desktop switching mode is to switch to the next desktop.

Step 103: performing desktop switching according to the determined primary desktop switching mode.

Here, each desktop in the mobile terminal has a number. Therefore, the number of a desktop to be displayed may be determined according to the determined primary desktop switching mode. Then, the desktop corresponding to the number is called and displayed.

Wherein, determining the number of the desktop to be displayed according to the determined primary desktop switching mode includes:
modifying the number of a current desktop according to the primary desktop switching mode to acquire the number of the desktop to be displayed, or determining the number of the desktop corresponding to the primary desktop switching mode according to a stored corresponding relation between a desktop switching mode and a desktop number.

For example, the number of the current desktop is 3, the primary desktop switching mode is to switch to the next desktop, and therefore the number of the desktop to be displayed is 4.

Alternatively, the primary desktop switching mode corresponds to switching to the 2nd desktop, and therefore the number of the desktop to be displayed is 2.

Of course, a prior art may also be applied in the embodiment of the present disclosure to perform desktop switching. For example, in the existing way of screen sliding, if the desktop switching mode is determined as switching to the next desktop, the interface of the next desktop may be called according to this desktop switching mode to switch from the current desktop to the next desktop. Thus, after it is determined as the primary desktop switching mode, the prior art is applied to call the interface of the corresponding desktop and to display the corresponding desktop.

The desktop switching process described above is applied in the mobile terminal, that is to say, it is a process for the mobile terminal to realize desktop switching. However, the embodiment of the present disclosure is not limited thereto. Such a switching process may also be applied in another electronic terminal configured with the acceleration sensor. Thus, a process for the electronic terminal to realize desktop switching is the same as the process described above, and includes: acquiring a current motion state of the electronic terminal by way of an acceleration sensor arranged in the electronic terminal; determining a primary desktop switching mode corresponding to the current motion state according to a stored corresponding relation between a motion state and a desktop switching mode; and performing desktop switching according to the primary desktop switching mode.

According to the desktop switching process described above, a device for an electronic terminal to realize desktop switching, referring to Fig. 3, may be constructed. Such a desktop switching device includes an acquiring unit 100, a determining unit 200 and a switching unit 300. Wherein,
the acquiring unit 100 is configured to acquire a current motion state of the electronic terminal by way of an acceleration sensor arranged in the electronic terminal;
the determining unit 200 is configured to determine a primary desktop switching mode corresponding to the current motion state according to a stored corresponding relation between a motion state and a desktop switching mode; and
the switching unit 300 is configured to perform desktop switching according to the primary desktop switching mode.

The acquiring unit 100 is specifically configured to acquire a first acceleration in a horizontal direction and a second acceleration in a vertical direction output by the acceleration sensor, and determine the current motion state according to a composite acceleration generated by the first acceleration and the second acceleration.

Meanwhile, the switching unit 300 is specifically configured to determine a number of a desktop to be displayed according to the primary desktop switching mode, call and display the desktop corresponding to the number.

Moreover, the switching unit 300 may also be specifically configured to modify the number of a current desktop according to the primary desktop switching mode to acquire the number of the desktop to be displayed, or determine the number of the desktop corresponding to the primary desktop switching mode according to a stored corresponding relation between a desktop switching mode and a desktop number.

The desktop switching device described above may be applied in the mobile terminal. Of course, the embodiment of the present disclosure is not limited thereto, and may also be applied in another movable electronic terminal. That is to say, the electronic terminal in the embodiment of the present disclosure is configured with the acceleration sensor, and includes such a desktop switching device.

In the embodiment of the present disclosure, the current motion state of the electronic terminal is acquired by way of the acceleration sensor arranged in the electronic terminal, the primary desktop switching mode corresponding to the current motion state is determined according to the stored corresponding relation between a motion state and a desktop switching mode, and desktop switching is performed according to the primary desktop switching mode. Thus, screen switching may be realized rapidly in the mobile terminal with the multi-screen system by swinging the electronic terminal. Thus, there is no need to switch between desktops through screen sliding, avoiding the wear and tear of a touch screen in the electronic terminal.

Moreover, such a way of realizing screen switching by swinging the electronic terminal avoids a monotonous way of screen switching, meets the diversified and personalized need of the market, and may increase the market share of the terminal with the multi-screen system.

It will be apparent to those skilled in the art that various modifications and variations can be made to the present disclosure without departing from the scope or spirit of the disclosure. Thus, the present disclosure is intended to cover these modifications and variations that fall within the scope of the appended claims and their equivalent techniques.

## Claims

1. A method for an electronic terminal to realize desktop switching, comprising:
acquiring a current motion state of the electronic terminal by way of an acceleration sensor arranged in the electronic terminal;
determining a primary desktop switching mode corresponding to the current motion state according to a stored corresponding relation between a motion state and a desktop switching mode; and
performing desktop switching according to the primary desktop switching mode.

2. The method according to claim 1, wherein the acquiring a current motion state comprises:
acquiring a first acceleration in a horizontal direction and a second acceleration in a vertical direction output by the acceleration sensor; and
determining the current motion state according a composite acceleration generated by the first acceleration and the second acceleration.

3. The method according to claim 1 or 2, wherein the current motion state comprises one of the followings: swinging to the left, swinging to the right, swinging downward, swinging upward, flipping, and rotating.

4. The method according to claim 1, wherein the performing desktop switching according to the primary desktop switching mode comprises:
determining a number of a desktop to be displayed according to the primary desktop switching mode; and
calling and displaying the desktop corresponding to the number.

5. The method according to claim 4, wherein the determining a number of a desktop to be displayed according to the primary desktop switching mode comprises:
modifying the number of a current desktop according to the primary desktop switching mode to acquire the number of the desktop to be displayed; or
determining the number of the desktop corresponding to the primary desktop switching mode according to a stored corresponding relation between a desktop switching mode and a desktop number.

6. A device for an electronic terminal to realize desktop switching comprising an acquiring unit, a determining unit, and a switching unit, wherein
the acquiring unit is configured to acquire a current motion state of the electronic terminal by way of an acceleration sensor arranged in the electronic terminal;
the determining unit is configured to determine a primary desktop switching mode corresponding to the current motion state according to a stored corresponding relation between a motion state and a desktop switching mode; and
the switching unit is configured to perform desktop switching according to the primary desktop switching mode.

7. The device according to claim 6, wherein
the acquiring unit is configured to acquire a first acceleration in a horizontal direction and a second acceleration in a vertical direction output by the acceleration sensor, and determine the current motion state according to a composite acceleration generated by the first acceleration and the second acceleration.

8. The device according to claim 6, wherein
the switching unit is configured to determine a number of a desktop to be displayed according to the primary desktop switching mode, call and display the desktop corresponding to the number.

9. The device according to claim 8, wherein
the switching unit is configured to modify the number of a current desktop according to the primary desktop switching mode to acquire the number of the desktop to be displayed, or determine the number of the desktop corresponding to the primary desktop switching mode according to a stored corresponding relation between a desktop switching mode and a desktop number.

10. An electronic terminal comprising the device of any one of claims 6 to 9.
